# EUROPEAN PATENT APPLICATION

(11) **EP 3 901 217 A1**
(43) Date of publication of application: **27.10.2021**
(21) Application number: 19908478.1
(22) Date of filing: 25.12.2019
(51) Int. Cl.: C08L 71/12, C08L 23/12, C08L 25/06, C08L 53/02, C08K 3/32, C08K 5/3492

(54) **POLYPROPYLENE-POLYPHENYLENE ETHER-POLYSTYRENE TERNARY ALLOY, PREPARATION METHOD THEREFOR AND USE THEREOF**

(30) Priority: 11.01.2019 CN 201910027481
(71) Applicant: Kingfa Sci. & Tech. Co., Ltd., Guangzhou, Guangdong 510663 (CN)
(72) Inventor: WANG, Wenchao, Guangzhou, Guangdong 510663 (CN); HUANG, Xianbo, Guangzhou, Guangdong 510663 (CN); YE, Nanbiao, Guangzhou, Guangdong 510663 (CN); YU, Quan, Guangzhou, Guangdong 510063 (CN); DING, Chao, Guangzhou, Guangdong 510663 (CN)
(74) Representative: dompatent von Kreisler Selting Werner - Partnerschaft von Patent- und Rechtsanwälten mbB
(86) International application number: PCT/CN2019/128143
(87) International publication number: WO 2020/143447

(57) **Abstract**

The present invention provides a polypropylene-polyphenylene ether-polystyrene ternary alloy, including the following components in parts by weight: 100 parts of a polypropylene and a polyphenylene ether and a polystyrene, wherein the polypropylene accounts for 10% to 60%, the polyphenylene ether accounts for 10% to 60%, and the polystyrene accounts for 5% to 30%; 5 parts to 25 parts of a compatibilizer; and 10 parts to 60 parts of a polyphosphate compound. The polypropylene-polyphenylene ether-polystyrene ternary alloy of the present invention has an advantage of a less smoke release amount during melt.

## Description

### TECHNICAL FIELD

The present invention relates to the technical field of polymer materials, and particularly relates to a polypropylene-polyphenylene ether-polystyrene ternary alloy, a preparation method and use thereof.

### BACKGROUND

Polyphenylene ether (PPE) itself has a relatively high heat resistance, better mechanical and electrical performances, but it has a more expensive price and a poorer solvent resistance. Polypropylene (PP) has a cheap price, and an excellent solvent resistance, but it has a lower heat resistance, and is easy to warp during injection molding. Polystyrene (PS) usually is an amorphous random polymer with excellent thermal insulation, electric insulation and transparency, which long-term using temperature is 0°C to 70°C, but it is brittle and easy to crack at a low temperature. A combination of the three can produce an alloy material with a moderate price, and balanced heat resistance and solvent resistance.

A thermoplastic resin composition, especially polyphenylene ether, polypropylene, and polystyrene composition may emit a large amount of smoke during melt. A smoke release during combustion is caused by insufficient combustion of each component, which is easy to emit black smoke. In order to solve this technical problem, in the existing technology, it is often necessary to add one or more synergists or use an environmentally friendly flame retardant (such as a silicone flame retardant, but the silicone flame retardant has a very low retardant efficiency and a limited application) in a composition formula, to achieve an effect of reducing smoke generation during combustion. However, a smoke release during melt is smoke formed by volatilization of some compounds with smaller molecular weight, or thermal decomposition and volatilization of an oligomer. The mechanisms of the two are not the same, and therefore the solutions are also different.

As the polyphenylene ether, the polypropylene and the polystyrene has a large smoke release amount during melt injection molding, a strong ventilation system is often required during production of a ternary alloy, but the smoke cannot be directly discharged into the atmosphere, and an additional environmental protection treatment is required, which increases a production cost and also will bring harm to the lives and health of operating workers. Therefore, according to a market demand, it is urgent to solve the defect of the large smoke release amount during melt injection molding of the ternary alloy.

Chinese patent CN102719014A discloses a polypropylene-polyphenylene ether-polystyrene ternary alloy, which has an excellent balance between rigidity, toughness, and processability, and can be applied to various fields, but it does not optimize the smoke release amount during melt.

### SUMMARY

An objective of the present invention is to overcome the above technical defect and provide a polypropylene-polyphenylene ether-polystyrene ternary alloy, which has an advantage of a less smoke release amount during melt.

Another objective of the present invention is to provide a preparation method of the above-mentioned polypropylene-polyphenylene ether-polystyrene ternary alloy, and use of a polyphosphate compound in reducing the smoke release amount during melt of the polypropylene-polyphenylene ether-polystyrene ternary alloy.

The present invention is realized by the following technical solutions.

A polypropylene-polyphenylene ether-polystyrene ternary alloy includes the following components in parts by weight:
100 parts of a polypropylene and a polyphenylene ether and a polystyrene, wherein the polypropylene accounts for 10% to 60%, the polyphenylene ether accounts for 10% to 60%, and the polystyrene accounts for 5% to 30%;
5 parts to 25 parts of a compatibilizer; and
10 parts to 60 parts of a polyphosphate compound.

Preferably, the following components are included in parts by weight:
100 parts of the polypropylene and the polyphenylene ether and the polystyrene, wherein the polypropylene accounts for 10% to 60%, the polyphenylene ether accounts for 10% to 60%, and the polystyrene accounts for 5% to 30%;
8 parts to 18 parts of the compatibilizer; and
20 parts to 50 parts of the polyphosphate compound.

Generally, when the polyphosphate compound is used as a flame retardant, its starting dosage must be high to achieve a good flame-retardant effect. However, there is no direct correspondence between reducing smoke release during melt and flame retarding. An addition of the polyphosphate compound can effectively inhibit volatilization and decomposition of some small molecular compounds, thereby reducing the smoke release during melt. Therefore, adding 10 parts of the polyphosphate compound can make an effect of inhibiting the smoke release during melt. The dosage of the polyphosphate compound can be 15 parts, 20 parts, 30 parts, and to 60 parts, and the effect of reducing the smoke release during melt improves with an increase in the dosage of the polyphosphate compound.

In addition to the polyphosphate compound, other phosphorus-containing compounds with good flame retardant use have a poorer effect on reducing the smoke release during melt, and it is difficult to control the smoke release amount during melt, such as: hexaphenoxycyclotriphosphazene, bisphenol A-bis(diphenyl phosphate), resorcinol bis[di(2,6-dimethylphenyl phosphate)], triphenylphosphine oxide, triphenyl phosphate, tert-butylated triphenylphosphate, tri(2,6-xylenyl)phosphate, resorcinol-bis(diphenyl phosphate), hexaaminocyclotriphosphazene, hexaphenylaminocyclotriphosphazene, and poly bis(4-carboxyphenoxy)phosphazene.

The polypropylene can be a homopolymerized polypropylene or a copolymerized polypropylene, and its melt index can be 0.5 g/10min to 80 g/10min under a test condition of 230°C, 2.16 kg. The copolymerized polypropylene can be an ethylene-propylene copolymer.

The polyphenylene ether can be at least one of poly 2,6-dimethylphenol, poly(2,6-dimethyl-1,4-phenylene)ether, poly(2-methy-6-ethyl-1,4-phenylene)ether, poly(2,6-diethyl-1,4-phenylene)ether, poly(2-ethyl-6-n-propyl-1,4-phenylene)ether, poly(2,6-di-n-propyl-1,4-phenylene)ether, poly(2-methyl-6-n-butyl-1,4-phenylene)ether, poly(2-ethyl -6-isopropyl-1,4-phenylene)ether, poly(2-methyl-6-chloroethyl-1,4-phenylene)ether, poly(2-methyl-6-hydroxyethyl-1,4-phenylene)ether, and poly(2-methyl-6-chloroethyl-1,4-phenylene)ether. Preferably, the polyphenylene ether is one of poly(2,6-dimethyl-1,4-phenylene)ether, poly(2-methyl-6-ethyl-1,4-phenylene)ether, poly(2,6-diethyl-1,4-phenylene)ether, and poly 2,6-dimethylphenol.

The polystyrene is a polymer synthesized from styrene monomers through a free radical addition polymerization.

The compatibilizer is selected from a hydrogenated block copolymers of an alkenyl aromatic compound and a conjugated diene.

The hydrogenated block copolymer of the alkenyl aromatic compound and the conjugated diene is an A-B-A type triblock copolymer. The A block is a polymer of a vinyl aromatic compound. The B block is a hydrogenated polymer of a conjugated diene compound.

The vinyl aromatic compound is selected from at least one of styrene, alkyl styrene, ethyl vinyl benzene, and divinyl benzene. The conjugated diene compound is selected from at least one of butadiene and isoprene.

The vinyl aromatic compound is selectively hydrogenated, wherein a hydrogenation degree of the polymer of the conjugated diene compound can be 50% to 100%.

The A-B-A type block copolymer of the present invention can be a polystyrene-hydrogenated polyisoprene-polystyrene block copolymer, wherein a molecular weight is 50,000 to 300,000, the hydrogenated polyisoprene accounts for 50% to 80% of a content of the block copolymer, and a hydrogenation degree is ≥80%. Preferably, the molecular weight is 150,000 to 200,000, and the hydrogenated polyisoprene accounts for 60% to 70% of the content of the block copolymer, and the hydrogenation degree is ≥90%.

The polyphosphate compound is selected from at least one of ammonium polyphosphate, melamine phosphate, melamine pyrophosphate, and melamine polyphosphate.

Preferably, the polyphosphate compound is selected from ammonium polyphosphate.

In parts by weight, 0 parts to 100 parts of a reinforcing fiber is further included. The reinforcing fiber is selected from at least one of glass fiber, carbon fiber, metal fiber, and whisker.

In the present invention according to other performance requirements, a filler can further be added according to other performances. The filler can be at least of alumina, carbon black, clay, zirconium phosphate, kaolin, calcium carbonate, copper powder, diatomaceous earth, graphite, mica, silica, titanium dioxide, zeolite, talc, glass bead, glass powder, wollastonite, organic fiber, basalt fiber, bamboo fiber, hemp fiber, cellulose fiber, and aramid fiber.

In parts by weight, 0 parts to 10 parts of an auxiliary agent is further included. The auxiliary agent is selected from at least one of an antioxidant, a coupling agent, a lubricant, a weather-resistant agent, and a colorant.

The lubricant is selected from at least one of a stearic acid salt lubricant, a fatty acid lubricant, and a stearate lubricant. The stearic acid salt lubricant is selected from at least one of calcium stearate, magnesium stearate, and zinc stearate. The fatty acid lubricant is selected from at least one of a fatty acid, a fatty acid derivative, and a fatty acid ester. The stearate lubricant is selected from at least one of glyceryl monostearate and pentaerythritol stearate.

The heat stabilizer is an organophosphite, and preferably is triphenyl phosphite, tris-(2,6-dimethylphenyl) phosphite, tris-nonylphenyl phosphite, dimethyl phenylphosphonate, or trimethyl phosphate.

The antioxidant is an organophosphite, an alkylated monohydric phenol or polyhydric phenol, an alkylation reaction product of a polyhydric phenol and a diene, a butylation reaction product of p-cresol or dicyclopentadiene, an alkylated hydroquinone, a hydroxylated thiodiphenyl ether, an alkylene-bisphenol, a benzyl compound, or a polyol ester antioxidant.

The light stabilizer is at least one of a benzotriazole light stabilizer, and a benzophenone light stabilizer.

The plasticizer is a phthalate.

The colorant is a pigment or a dye.

A preparation method of the above-mentioned polypropylene-polyphenylene ether-polystyrene ternary alloy includes the following steps: adding the polypropylene, the polyphenylene ether, the polystyrene, the compatibilizer, and the polyphosphate compound according to a ratio into a high-speed mixer and mixing evenly to form a mixture, then putting the mixture into a twin-screw extruder, side feeding a reinforcing fiber, granulating by extrusion to obtain the polypropylene-polyphenylene ether-polystyrene ternary alloy. A temperature in each section of the screw is 180°C to 195°C in Section One, and 200°C to 240°C in Section Two to Section Nine.

The polyphosphate compound is applied to reduce the smoke release amount during melt of the polypropylene-polyphenylene ether-polystyrene ternary alloy, wherein there are 100 parts of the polypropylene and the polyphenylene ether and the polystyrene, and 10 parts to 60 parts of the polyphosphate compound.

The present invention has the following beneficial effects.

In the present invention, by adding the polyphosphate compound to the alloy, it is unexpectedly found that the polyphosphate compound can effectively reduce volatilization of molecules with a relatively small molecular weight, and decomposition and volatilization of some polymers during melt of the ternary alloy, thus reducing the smoke release during melt, and reducing pollution to the environment. Further, ammonium polyphosphate is the most effective for reducing the smoke release amount during melt.

### DETAILED DESCRIPTION

The present invention will be further illustrated by specific implementations below. The following embodiments are preferred implementations of the present invention, but the implementations of the present invention are not limited by the following embodiments.

A preparation method of a ternary alloy in Embodiments and Comparative examples is that: a polypropylene, a polyphenylene ether, a polystyrene, a compatibilizer, a polyphosphate compound, and an auxiliary agent were added according to a ratio in a high-speed mixer and mixed evenly to form a mixture, and then the mixture was put into a twin-screw extruder, a reinforcing fiber was side fed, and the mixture was granulated by extrusion to obtain a polypropylene-polyphenylene ether-polystyrene ternary alloy, a temperature in each section of the screw was 180°C to 195°C in Section One, and 200°C to 240°C in Section Two to Section Nine.

Raw materials as follows are used in the Embodiments and the Comparative examples, but do not limit the present invention.
Compatibilizer: a polystyrene-hydrogenated polyisoprene-polystyrene block copolymer, with a hydrogenation degree of ≥90%;
lubricant: a silicone lubricant.

Each performance test method:
(1) Smoke release amount during melt of alloy: melt injection-molding at 240°C was carried out, the smoke release amount at an injection nozzle was visually measured and scored on a scale of 1 to 10, the higher the score was, the more the smoke release amount was.

**Table 1. Ratios (parts by weight) of each component in Embodiments and Comparative Examples and each performance test results**

| | Embod iment 1 | Embod iment 2 | Embod iment 3 | Embod iment 4 | Embod iment 5 | Embod iment 6 | Embod iment 7 | Compa rative Examp le 1 | Compa rative Examp le 2 |
|---|---|---|---|---|---|---|---|---|---|
| PP | 30 | 30 | 30 | 30 | 30 | 30 | 30 | 30 | 30 |
| PPE | 60 | 60 | 60 | 60 | 60 | 60 | 60 | 60 | 60 |
| PS | 10 | 10 | 10 | 10 | 10 | 10 | 10 | 10 | 10 |
| Compati bilizer | 10 | 10 | 10 | 10 | 10 | 10 | 10 | 10 | 10 |
| Ammon ium polypho sphate | 10 | 15 | 20 | 50 | 60 | - | - | - | - |
| Melami ne phospha te | - | - | - | - | - | 15 | - | - | - |
| Melami ne polypho sphate | - | - | - | - | - | - | 15 | - | - |
| Hexaph enoxycy clotriph osphaze ne | - | - | - | - | - | - | - | - | 50 |
| Glass fiber | 30 | 30 | 30 | 30 | 30 | 30 | 30 | 30 | 30 |
| Lubrica nt | 0.1 | 0.1 | 0.1 | 0.1 | 0.1 | 0.1 | 0.1 | 0.1 | 0.1 |
| Antioxi dant 168 | 0.1 | 0.1 | 0.1 | 0.1 | 0.1 | 0.1 | 0.1 | 0.1 | 0.1 |
| Smoke release amount | 6 | 4 | 3 | 1 | 1 | 5 | 5 | 10 | 9 |
| during melt of alloy | | | | | | | | | |

It can be seen from Embodiments 1 to 5 that adding 10 parts of ammonium polyphosphate can make an effect of effectively reducing the smoke release amount during melt. As a dosage of ammonium polyphosphate increases, smoke release during melt will be better inhibited. When the dosage of ammonium polyphosphate reaches 20 parts, the smoke release amount during melt has already been very small, after the dosage is continued to increase to 50 parts, inhibition of the smoke release has reached the strongest, and even if the dosage of ammonium polyphosphate is further continued to increase, an effect of inhibiting the smoke release will no longer be increased, and instead a cost will be increased or other performances will be influenced.

It can be seen from Embodiment 2 or 6 or 7 that ammonium polyphosphate is better than melamine phosphate and melamine polyphosphate in inhibiting a rate of smoke release during melt.

It can be seen from Comparative Example 2 that hexaphenoxycyclotriphosphazene is a very good flame retardant, but when its dosage is 50 parts, it cannot effectively inhibit the smoke release during melt.

## Claims

1. A polypropylene-polyphenylene ether-polystyrene ternary alloy, comprising the following components in parts by weight:
100 parts of a polypropylene and a polyphenylene ether and a polystyrene, wherein the polypropylene accounts for 10% to 60%, the polyphenylene ether accounts for 10% to 60%, and the polystyrene accounts for 5% to 30%;
5 parts to 25 parts of a compatibilizer; and
10 parts to 60 parts of a polyphosphate compound.

2. The polypropylene-polyphenylene ether-polystyrene ternary alloy according to claim 1, comprising the following components in parts by weight:
100 parts of the polypropylene and the polyphenylene ether and the polystyrene, wherein the polypropylene accounts for 10% to 60%, the polyphenylene ether accounts for 10% to 60%, and the polystyrene accounts for 5% to 30%;
8 parts to 18 parts of the compatibilizer; and
20 parts to 50 parts of the polyphosphate compound.

3. The polypropylene-polyphenylene ether-polystyrene ternary alloy according to claim 1 or 2, wherein the compatibilizer is selected from a hydrogenated block copolymer of an alkenyl aromatic compound and a conjugated diene.

4. The polypropylene-polyphenylene ether-polystyrene ternary alloy according to claim 3, wherein the hydrogenated block copolymer of the alkenyl aromatic compound and the conjugated diene is an A-B-A type triblock copolymer; the A block is a polymer of a vinyl aromatic compound; the B block is a hydrogenated polymer of a conjugated diene compound.

5. The polypropylene-polyphenylene ether-polystyrene ternary alloy according to claim 4, wherein the vinyl aromatic compound is selected from at least one of styrene, alkyl styrene, ethyl vinyl benzene, and divinyl benzene; the conjugated diene compound is selected from at least one of butadiene and isoprene.

6. The polypropylene-polyphenylene ether-polystyrene ternary alloy according to claim 1 or 2, wherein the polyphosphate compound is selected from at least one of ammonium polyphosphate, melamine phosphate, melamine pyrophosphate, and melamine polyphosphate; preferably, the polyphosphate compound is selected from ammonium polyphosphate.

7. The polypropylene-polyphenylene ether-polystyrene ternary alloy according to claim 1 or 2, further comprising 0 parts to 100 parts of a reinforcing fiber in parts by weight; the reinforcing fiber is selected from at least one of glass fiber, carbon fiber, metal fiber, and whisker.

8. The polypropylene-polyphenylene ether-polystyrene ternary alloy according to claim 1 or 2, further comprising 0 parts to 10 parts of an auxiliary agent in parts by weight; the auxiliary agent is selected from at least one of an antioxidant, a coupling agent, a lubricant, a weather-resistant agent, and a colorant.

9. A preparation method of the polypropylene-polyphenylene ether-polystyrene ternary alloy of claim 7, wherein the method comprises the following steps: adding the polypropylene, the polyphenylene ether, the polystyrene, the compatibilizer, and the polyphosphate compound according to a ratio into a high-speed mixer and mixing evenly to form a mixture, then putting the mixture into a twin-screw extruder, side feeding the reinforcing fiber, granulating by extrusion to obtain the polypropylene-polyphenylene ether-polystyrene ternary alloy, a temperature in each section of the screw is 180°C to 195°C in Section One, and 200°C to 240°C in Section Two to Section Nine.

10. Use of a polyphosphate compound in reducing a smoke release amount during melt of a polypropylene-polyphenylene ether-polystyrene ternary alloy, wherein there are 100 parts of the polypropylene and the polyphenylene ether and the polystyrene, and 10 parts to 60 parts of the polyphosphate compound.
